# EUROPEAN PATENT SPECIFICATION

(11) **EP 2 860 048 B1**
(45) Date of publication and mention of the grant of the patent: **20.06.2018**
(21) Application number: 13195906.6
(22) Date of filing: 05.12.2013
(51) Int. Cl.: B60C 11/04, B60C 11/13, B60C 11/11, B60C 11/12

(54) **Tire tread with angled and serrated groove walls**
Reifenlauffläche mit geneigten und gerippten Nutenwänden
Bande de roulement de pneu avec paroi de rainure à nervure inclinée

(30) Priority: 09.10.2013 US 201314049675
(43) Date of publication of application: 15.04.2015
(73) Proprietor: Cooper Tire & Rubber Company, Findlay, OH 45840 (US)
(72) Inventor: Jacobs, Jeremy J., Findlay, OH Ohio 45840 (US)
(74) Representative: Johnstone, Douglas Ian

(56) References cited:
- WO-A1-2009/082394
- DE-A1-102007 016 930
- JP-U- H0 565 609
- US-B2- 6 986 372

## Description

### Background

The present disclosure relates to an automotive tire, and specifically to the tread thereof. It finds application in conjunction with tire that exhibits improved handling, improved wet and snow traction, and reduced noise generation, and will be described with reference to a tire that is particularly useful in snow. However, it is to be appreciated that the present exemplary embodiment is also amenable to other like applications, and that may use one or more of the predicted performance benefits.

Commonly owned US 6,986,372, on which the preamble of claim 1 is based, discloses a tire in which at least selected grooves have serrated sidewalls. Specifically, all or a major portion of the surface of the sidewalls facing the groove includes these serrations. The serrations terminate short of a groove base or bottom surface. This arrangement of serrated sidewalls provides for improved traction, handling characteristics, control, as well as improved braking of the vehicle as described in the '372 patent.

Although the tire described in the above-noted patent has met with commercial success, there is always a need for improved performance such as traction, noise, handling, control, braking, etc., and particularly in connection with improved performance in snow.

WO 2009/082394 discloses so-called ejectors in each groove of a tire wherein the ejectors extend perpendicularly to a tread surface of the tire. JPH0565609U discloses protrusions in each zig-zag groove of a tire. The protrusions extend from the bottom of the groove along the lower part of troughs of sidewalls of the zig-zag groove and each trough is disposed along a plane perpendicular to the major radial plane of the tire. DE 102007016930 discloses projections in each groove of a tire and the projections extend from the sidewalls of the groove. The base of each projection is on the bottom of the groove and the apex of the projection is adjacent the tread surface, each projection being symmetrical about a plane perpendicular to the major radial plane of the tire.

### Brief Description

According to the present invention there is provided a pneumatic tire comprising: first and second laterally spaced sides; and a tread interposed between the first and second sides, the tread including a tread surface having at least one groove therein, the at least one groove including facing, first and second sidewalls separated by a groove bottom surface, and ribs extending over at least a portion of each of the first and second sidewalls and the ribs on both of the first and second sidewalls extend at a non-perpendicular angle relative to the tread surface, wherein the ribs on the first and second sidewalls of the groove are opposed to each other, characterized in that the ribs on the first sidewall are at a positive angle and the ribs on the second sidewall are at a negative angle when measured relative to a plane that is perpendicular to the groove bottom surface and perpendicular to the surface of each of the sidewalls.

The at least one groove may extend in a substantially circumferential direction around the tire, or in a substantially lateral direction across the tire.

The ribs on at least one of the first and second sidewalls may extend over only a portion thereof, and in one arrangement extend over only a portion of each of the first and second sidewalls.

The at least one groove in an exemplary arrangement includes one of first and second inner grooves forming a central tread block separated from first and second intermediate tread blocks by the inner grooves that extend in a substantially circumferential direction around the tire.

The first and second intermediate tread blocks may be spaced from first and second shoulder tread blocks by first and second outer grooves extending in a substantially circumferential direction around the tire, and the first and second outer grooves are interposed between the first and second inner grooves and the first and second sides of the tire, respectively.

In an embodiment of the disclosure, the ribs are also provided in the first and second outer grooves.

In one exemplary embodiment, the ribs are generally defined by alternating peaks and valleys, and may extend inwardly from the ground engaging tread surface toward the bottom surface of the groove.

In one arrangement, the first and second intermediate tread blocks include ribs only on sidewalls that extend in a substantially circumferential direction around the tire, and sidewalls forming lateral grooves of the intermediate tread blocks are devoid of ribs.

In another arrangement, the central tread block includes lateral grooves that extend in a substantially lateral direction across the tire, and sidewalls forming the lateral grooves of the central tread blocks have ribs extending along at least a major portion thereof.

A tire that includes the angled rib snow groove illustrates improved performance.

The angled ribs exhibit improved grabbing and holding the snow in the tread pattern for increased "snow on snow" traction.

The angled ribs provide increased surface area length than prior arrangements, which results in better mechanical locking with the snow rib that is formed when the angled rib snow grooves are in a snow-filled contact patch.

The amount of snow traction may also increase from the mechanical shearing of the snow ribs formed in the angled rib snow grooves within the contact patch.

Providing the angled ribs in the grooves may prevent standing waves from forming and thereby reduce generated noise.

Still other benefits and advantages of the present disclosure will become more apparent from reading and understanding the following detailed description.

### Brief Description of the Drawings

FIGURE 1 is a perspective view of a tire that includes one or more grooves having angled ribs.
FIGURE 2 is an enlarged front plan view of a portion of the tire of Figure 1.
FIGURE 3 is a further enlarged view of a portion of a tread of a tire similar to that of Figures 1 and 2 with some of the tread features removed for ease of illustration.
FIGURE 4 is another enlarged perspective view of a portion of a tread of a tire similar to that of Figures 1-3 with some of the tread features removed for ease of illustration.
FIGURE 5 is a partial view of a sidewall and a portion of a tire groove that incorporates the angled ribs.
FIGURE 6 is a plan view of the angled ribs along a sidewall of a tire groove.

### Detailed Description

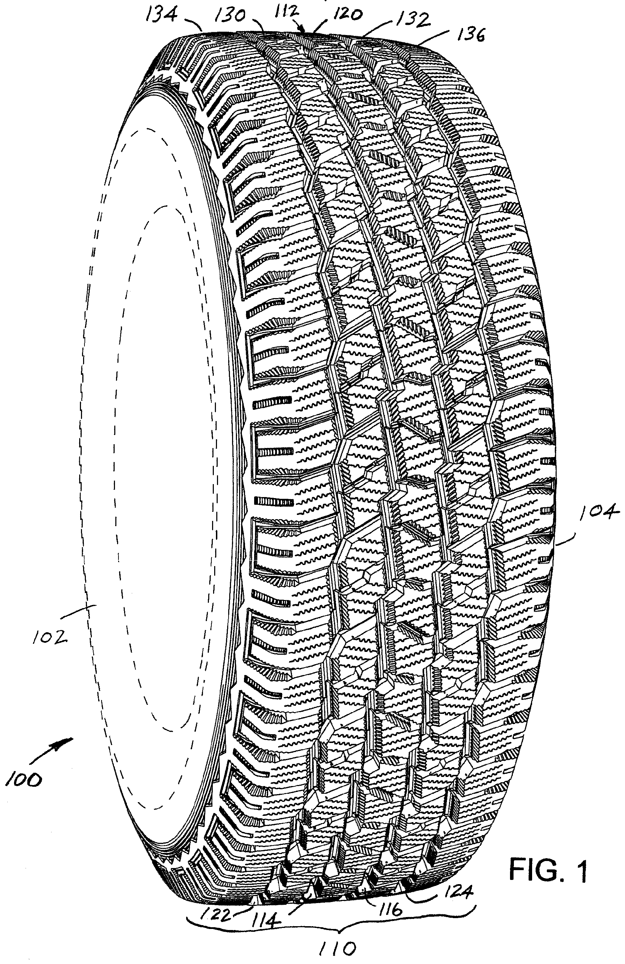

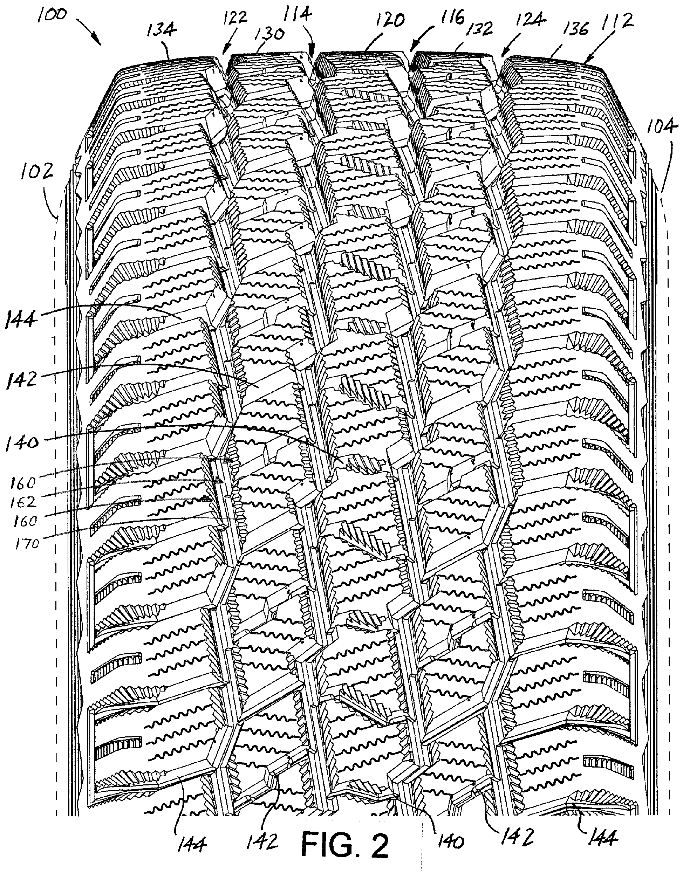

With reference to FIGURES 1 and 2, there is shown a pneumatic tire 100 that includes a first or outer side 102 (portions of the side being shown in broken line since those features are conventional and form no part of the present disclosure) and a second or inner side 104. A tire tread 110, typically an elastomeric material, is provided on the tire and extends between the first and second sides 102, 104. The tread 110 has a ground engaging or tread surface 112 that is formed in a desired tread pattern through the incorporation of various grooves that extend in a generally circumferential direction around the tire and others that extend in a generally lateral direction across the tire.

More specifically, the tread 110 of the present disclosure includes first and second inner or central grooves 114, 116 extending in a generally circumferential direction around the tire and that form a central tread block 120 between them. In addition, first and second outer grooves 122, 124 extend in a generally circumferential direction around the tire 100 and together with the central grooves 114, 116 form intermediate tread block portions 130, 132. Likewise, the outer grooves 122, 124 divide the intermediate tread block portions 130, 132 from shoulder block portions 134, 136. The shoulder block portions 134, 136, in turn, are located between the outer grooves 122, 124 and the respective sides 102, 104 of the tire 100. The inner and outer grooves 114, 116, 122, 124 are generally equi-spaced in a lateral direction across the tire, although one skilled in the art will appreciate that the grooves need not necessarily be equally spaced in all applications of the present disclosure.

In addition, grooves 140 extend in a substantially lateral direction through the central tread block 120 and separate the central tread block into central tread block portions. Similarly, grooves 142 extend in a substantially lateral direction through the intermediate tread blocks 130, 132, and segregate the intermediate tread block into intermediate tread block portions, and likewise grooves 144 extend in a substantially lateral direction through the shoulder tread blocks 134, 136 to define shoulder tread block portions. As perhaps best illustrated in Figures 1 and 2, the different lateral grooves 140, 142, 144 are not aligned with one another in this embodiment but rather are offset from one another and form a zig-zag configuration proceeding from one side of the tire 100 to the other side. The same number of lateral grooves is provided through each of the central tread blocks 120, intermediate tread blocks 130, 132, and shoulder tread blocks 134, 136. One skilled in the art will appreciate, however, that the same number of lateral grooves need not necessarily be used in the center, intermediate, and shoulder rows of tread blocks in all applications of the present disclosure.

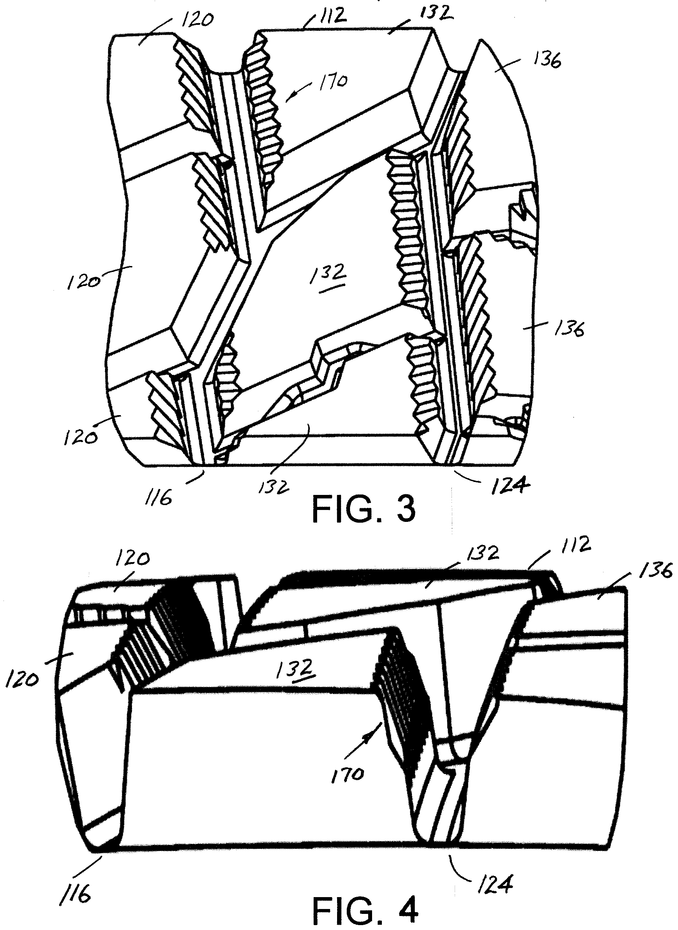

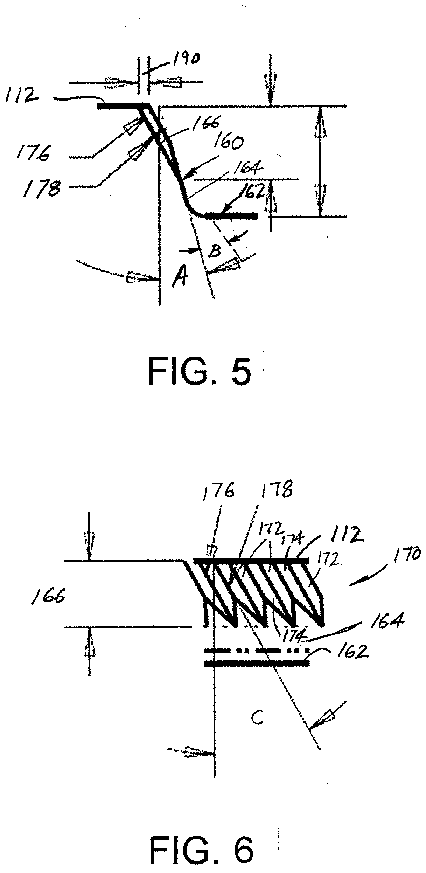

With continued reference to Figures 1 and 2, and additional reference to Figures 3 - 5, the different grooves 114, 116, 122, 124 (circumferentially extending grooves) and 140, 142, 144 (laterally extending grooves) have a generally U-shape formed by first and second sidewalls 160 and a bottom surface or base wall 162. The sidewalls 160 of a groove are disposed in generally facing relation, i.e. the sidewalls face one another across the void of the groove. As perhaps best illustrated in Figures 4 and 5, a first or lower portion 164 of the sidewall 160 extends outwardly from the bottom surface 162 of the groove at an angle A (the angle A being measured relative to perpendicular to the bottom surface 162 of the groove or perpendicular to the ground engaging surface 112 of the tread). It is contemplated that the angle A may range from 0° to 45°; preferably 5° to 20°; and more preferably 5° to 10°. In addition, a second or upper portion 166 of the sidewall 160 extends at an additional angle B. It is contemplated that the angle B may range from 0° to 45°; preferably 10° to 45°; and more preferably 25° to 30°.

At least some of the sidewalls 160, and as shown here the upper portions 166 of these sidewalls, include one or more serrations or ribs 170. The ribs are formed by angled faces 172, 174 that intersect in generally V-shapes to form alternating valleys 176 and peaks 178 (Figures 5 and 6). Further, the valleys 176 and peaks 178 are disposed at an angle C (Figure 6) relative to normal. It is contemplated that the angle C may range from 1° to 89°; preferably 20° to 50°; and more preferably 30° to 45°. Still further, the angled ribs 170 on one sidewall are different and, in the exemplary embodiment, are opposed to the angled ribs on the other sidewall of the groove. That is, the same degree of angularity may or may not be used, however the angles C in the exemplary embodiment are opposite to one another on the two sidewalls 160 that together with a bottom surface 162 form a particular groove. It will also be appreciated that a height 190 of the ribs 170 may be varied depending on other parameters of the tire.

Still other rib shapes than the illustrated and above-described V-shaped ribs 172 can be used. For example, the ribs can be U-shaped which in some instances may be desirable since these ribs would provide less stress concentration at the valleys, etc. Similarly, the pitch may be varied, i.e., the distance between the adjacent peaks of the V-shaped grooves or U-shaped grooves, may be varied for other design reasons such as noise. By way of example, a maximum range for pitch distance is 0.5mm (0.02") to 12.7mm (0.5"); preferably from 1.8mm (0.07") to 5.1mm (0.2"); and more preferably from 2.5mm (0.1") to 3.8mm (0.15"). Exemplary groove widths may vary from about 1.3mm (0.05") to about 25.4mm (1.00"), the groove depth may vary from about 2.5mm (0.10") to about 25.4mm (1.00"), and the depth of the serrations 166 may range from 5% to 95% of the overall groove depth. The dimension 190 has a preferred range from about 2.5mm (0.1") to 3.8mm (0.15"), and an intermediate range of 1.3mm (0.05") to 5.1mm (0.2"). The depth 166 or depth of the upper portion may range from 50-80% of the full groove depth, and more preferably from 60-75% of the full groove depth.

Figures 1 - 4 show some of the particular structural features of these ribs 170. For example, the first and second central grooves 114, 116 each include ribs 170 on both sidewalls 160 that are disposed in facing relation. As noted previously, the ribs 170 are preferably angled, namely, angle C shown in Figure 6 (i.e., between 1° and 89°) from a plane extending perpendicular to the bottom surface 162 or perpendicular to the ground engaging surface 112 of the tread. As evident in Figures 1 - 3, the ribs 170 on the facing sidewalls 160 are opposite one another, i.e., the ribs angle in different directions. One rib on one sidewall is a positive angle C and the rib on the other sidewall is a negative angle C when measured relative to a plane that is perpendicular to the bottom wall 162 and perpendicular to the surface of each of the sidewalls 160.

Figures 1 and 2 also illustrate that the lateral grooves 140 include ribs 170 on the facing sidewalls 160 thereof. The ribs 170 on these facing sidewalls 160 are again angled in opposite directions. Thus, each of the central tread block portions 120 include ribs 170 in substantially surrounding relation about the central tread block portions. The ribs 170 extend over the upper portion 166 of each sidewall 160 and are angled outwardly as represented by the sum of angles A and B (Figure 5). The ribs 170 extend over a majority of the longitudinal length of the sidewall 160 (where the longitudinal length is in defined in a direction that extends from left to right as viewed in Figure 6).

The outer grooves 122, 124 are also shown to have ribs 170 disposed on both of the sidewalls 160 that face one another, and again in this arrangement the ribs are also disposed at opposite angles. Here, however, the intermediate tread blocks 130, 132 do not have ribs 170 along the lateral grooves 142. In other instances, it may be desirable to include ribs 170 along these lateral grooves, but in this exemplary embodiment the facing sidewalls 160 of the lateral grooves 142 in the intermediate tread blocks 130, 132 are devoid of any ribs.

Is also evident in Figures 1 and 2, that the grooves 142 in the shoulder tread block portions 134, 136 are also devoid of ribs along a first portion as the groove extends laterally from the outer groove 122, 124 toward the respective side 102, 104 of the tire. As the groove proceeds over the shoulder of the tire 100, however, ribs 180 are provided. In this particular exemplary embodiment, the ribs 180 in the outer ends of the lateral grooves 142 in the shoulder tread block portions are not arranged along an angle C as is the case with ribs 170 in other portions of the tire tread. Rather, ribs 180 are normal to the bottom surface 162 (i.e., angle C equals 0°).

In summary, winter or snow performance is improved. The angled ribs 170, particularly when used with opposing angles on opposite sidewalls 160 of the grooves, provide enhanced grabbing and holding of the snow in the tread pattern 110. This provides increased "snow on snow" traction. The angled ribs 170 provide an increase in surface area length than existing rib arrangements that contributes to improved mechanical locking with the snow rib that is formed when the angled rib snow grooves form within the contact patch. Moreover, the opposing angles on facing sidewalls of selected groups also provide better mechanical locking with the snow rib. This tread arrangement also increases the amount of snow traction from the mechanical shearing of the snow ribs formed in the angled rib snow grooves within the contact patch.

The serrations or ribs 170 are designed at an angle instead of being perpendicular to the tire surface (either the ground engaging surface 112 or the bottom surface 162 of the grooves). It will also be appreciated that the mold geometries required to create this tread 110 are rather complex and crowded. At select intersections of circumferentially extending and the laterally extending grooves, the ribs 170 along a particular sidewall 160 may not extend along the entire longitudinal length of the groove sidewall. In some instances, the lack of ribs 170 in select regions of the grooves can be advantageously used to aid in removing snow from the groove.

A pneumatic tire may comprise: first and second laterally spaced sides; and a tread interposed between the first and second sides, the tread including a tread surface having at least one groove therein, the at least one groove including facing, first and second sidewalls separated by a groove bottom surface, and a series of serrations extending over at least a portion of a height of the facing sidewalls, wherein the serrations extend at a non-perpendicular angle relative to the tread surface and the serrations on the first and second sidewalls of the groove are opposed to each other. The serrations may alternate between adjacent peaks and valleys. The adjacent peaks and valleys of the serrations may generally form a V-shape in cross-section. The serrations may extend inwardly from the tread surface and only along a portion of the sidewalls. The serrations may be provided in each groove that forms a central tread block portion of the tread surface.

This written description uses examples to describe the disclosure, including the best mode, and also to enable any person skilled in the art to make and use the disclosure. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims. It will also be appreciated that not all of the tread features such as all of the grooves, nor all of the ribs, etc. in the illustrated tire tread, have been identified by reference numerals for ease of illustration. However, similar features or components that are repeated in the tire tread design are structurally or functionally identical or equivalent to that described above unless particularly noted otherwise.
- 100: tire
- 102: 1^{st}/outer side
- 104: 2^{nd}/inner side
- 110: tread
- 112: ground engaging surface
- 114: first/inner groove
- 116: second/inner groove
- 120: central tread block
- 122: first/outer groove
- 124: second/outer groove
- 130: intermediate tread block
- 132: intermediate tread block
- 134: shoulder tread block
- 136: shoulder tread block
- 140: lateral groove (central tread block)
- 142: lateral groove (intermediate tread block)
- 144: lateral groove (shoulder tread block)
- 160: groove sidewall
- 162: bottom surface
- 164: first/lower portion of sidewall
- 166: second/upper portion of sidewall
- 170: serration/rib
- 172: angled face of separation/rib
- 174: angled face of separation/rib
- 176: valley
- 178: peak
- 180: rib in shoulder tread block

## Claims

1. A pneumatic tire (100) comprising:
first and second laterally spaced sides (102, 104); and
a tread (110) interposed between the first and second sides (102, 104), the tread (110) including a tread surface (112) having at least one groove (114, 116, 122, 124, 140, 142, 144) therein, the at least one groove including facing, first and second sidewalls (160) separated by a groove bottom surface (162), and ribs (170) extending over at least a portion (166) of each of the first and second sidewalls (160) and the ribs (170) on both of the first and second sidewalls (160) extend at a non-perpendicular angle relative to the tread surface (112), wherein the ribs (170) on the first and second sidewalls (160) of the groove are opposed to each other,
**characterized in that** the ribs (170) on the first sidewall (160) are at a positive angle (C) and the ribs on the second sidewall (160) are at a negative angle (C) when measured relative to a plane that is perpendicular to the groove bottom surface (162) and perpendicular to the surface of each of the sidewalls.

2. The tire of claim 1 wherein the at least one groove (114, 116, 122, 124) extends in a substantially circumferential direction around the tire (100).

3. The tire of claim 1 wherein the at least one groove (140, 142, 144) extends in a substantially lateral direction across the tire (100).

4. The tire of claim 1 wherein the ribs (170) on at least one of the first and second sidewalls (160) extend over only a portion (166) thereof.

5. The tire of claim 4 wherein the ribs (170) extend inwardly from the tread surface (120) toward the bottom surface (162) of the at least one groove (114, 116, 122, 124, 140, 142, 144) and terminate on the sidewall (160) at a groove depth spaced above the bottom surface (162).

6. The tire of claim 1 wherein the at least one groove includes one of first and second inner grooves (114, 116) forming a central tread block (120) separated from first and second intermediate tread blocks (130, 132) where the inner grooves (114, 116) extend in a substantially circumferential direction around the tire (100).

7. The tire of claim 6 wherein the first and second intermediate tread blocks (130, 132) are spaced from first and second shoulder tread blocks (134, 136) by first and second outer grooves (122, 124) extending in a substantially circumferential direction around the tire (100), and wherein the first and second outer grooves (122, 124) are interposed between the first and second inner grooves (114, 116) and the first and second sides (102, 104) of the tire (100), respectively.

8. The tire of claim 1 wherein the ribs (170) are generally defined by alternating peaks (178) and valleys (176).

9. The tire of claim 8 wherein the ribs (170) extend inwardly from the tread surface (112) and terminate above the bottom surface (162) of the groove (114, 116, 122, 124, 140, 142, 144).

10. The tire of claim 1 wherein the at least one groove includes one of first and second inner grooves (114, 116) forming a central tread block (120) separated from first and second intermediate tread blocks (130, 132) where the inner grooves (114, 116) extend in a substantially circumferential direction around the tire (100), and each of the sidewalls (160) of the central tread block (120) includes ribs (170) formed thereon.

11. The tire of claim 10 wherein the ribs (170) on each of the sidewalls (160) of the central tread block (120) are disposed at substantially the same angle.

12. The tire of claim 11 wherein the first and second intermediate tread blocks (130, 132) include ribs (170) only on sidewalls (160) that extend in a substantially circumferential direction around the tire (100).

13. The tire of claim 12 wherein the first and second intermediate tread blocks (130, 132) include lateral grooves (142) that extend in a substantially lateral direction across the tire (100), and sidewalls (160) forming the lateral grooves (142) of the intermediate tread blocks (130, 132) are devoid of ribs (170).

14. The tire of claim 10 wherein the central tread block (120) includes lateral grooves (140) that extend in a substantially lateral direction across the tire (100), and sidewalls (160) forming the lateral grooves (140) of the central tread blocks (120) have ribs (170) extending along at least a major portion thereof.

## Patentansprüche

1. Luftreifen (100), umfassend:
eine erste und eine zweite seitlich voneinander beabstandete Seite (102, 104); und
ein Profil (110), das zwischen der ersten und der zweiten Seite (102, 104) angeordnet ist, wobei das Profil (110) eine Profiloberfläche (112) aufweist, die mindestens eine Rille (114, 116, 122, 124, 140, 142, 144) darin hat, wobei die mindestens eine Rille gegenüberliegende erste und zweite Seitenwände (160) aufweist, die von einer Rillenbodenfläche (162) getrennt sind, und Rippen (170), die sich über mindestens einen Teil (166) jeweils der ersten und der zweiten Seitenwand (160) erstrecken, und die Rippen (170) sich sowohl auf der ersten als auch der zweiten Seitenwand (160) in einem nicht rechtwinkligen Winkel relativ zur Profiloberfläche (112) erstrecken, wobei die Rippen (170) auf der ersten und der zweiten Seitenwand (160) der Rille einander gegenüber liegen,
**dadurch gekennzeichnet, dass** die Rippen (170) auf der ersten Seitenwand (160) in einem positiven Winkel (C) sind und die Rippen auf der zweiten Seitenwand (160) in einem negativen Winkel (C) sind, wenn sie relativ zu einer Ebene gemessen werden, der senkrecht zu der Rillenbodenfläche (162) und senkrecht zu der Oberfläche der jeweiligen Seitenwand ist.

2. Reifen gemäß Anspruch 1, wobei die mindestens eine Rille (114, 116, 122, 124) sich in einer im Wesentlichen umlaufenden Richtung um den Reifen (100) herum erstreckt.

3. Reifen gemäß Anspruch 1, wobei die mindestens eine Rille (140, 142, 144) sich in einer Richtung im Wesentlichen quer zu dem Reifen (100) erstreckt.

4. Reifen gemäß Anspruch 1, wobei sich die Rippen (170) auf mindestens einer aus der ersten oder der zweiten Seitenwand (160) nur über einen Teil (166) davon erstrecken.

5. Reifen gemäß Anspruch 4, wobei die Rippen (170) sich von der Profiloberfläche (120) zur Bodenfläche (162) der mindestens einen Rille (114, 116, 122, 124, 140, 142, 144) nach innen erstrecken und an der Seitenwand (160) auf einer Rillentiefe enden, die von der Bodenfläche (162) beabstandet ist.

6. Reifen gemäß Anspruch 1, wobei die mindestens eine Rille eine aus einer ersten und einer zweiten inneren Rille (114, 116) aufweist, die einen mittleren Profilblock (120) bilden, der von einem ersten und einem zweiten Zwischenprofilblock (130, 132) getrennt ist, wobei die inneren Rillen (114, 116) sich in einer im Wesentlichen umlaufenden Richtung um den Reifen (100) herum erstrecken.

7. Reifen gemäß Anspruch 6, wobei der erste und der zweite Zwischenprofilblock (130, 132) von einem ersten und einem zweiten Schulterprofilblock (134, 136) durch erste und zweite äußere Rillen (122, 124) beabstandet sind, die sich in einer im Wesentlichen umlaufenden Richtung um den Reifen (100) herum erstrecken, und wobei die erste und die zweite äußere Rille (122, 124) zwischen der ersten bzw. der zweiten inneren Rille (114, 116) und der ersten Seite bzw. der zweiten Seite (102, 104) des Reifens (100) angeordnet sind.

8. Reifen gemäß Anspruch 1, wobei die Rippen (170) allgemein durch sich abwechselnde Berge (178) und Täler (176) definiert sind.

9. Reifen gemäß Anspruch 8, wobei die Rippen (170) sich von der Profiloberfläche (112) nach innen erstrecken und oberhalb der Bodenfläche (162) der Rille (114, 116, 122, 124, 140, 142, 144) enden.

10. Reifen gemäß Anspruch 1, wobei die mindestens eine Rille eine aus einer ersten und einer zweiten inneren Rille (114, 116) aufweist, die einen mittleren Profilblock (120) bilden, der von dem ersten und dem zweiten Zwischenprofilblock (130, 132) getrennt ist, wobei die inneren Rillen (114, 116) sich in einer im Wesentlichen umlaufenden Richtung um den Reifen (100) herum erstrecken und die Seitenwände (160) des mittleren Blocks (120) jeweils Rippen (170) aufweisen, die auf ihnen ausgebildet sind.

11. Reifen gemäß Anspruch 10, wobei die Rippen (170) auf den jeweiligen Seitenwänden (160) des mittleren Profilblocks (120) im Wesentlichen im selben Winkel angeordnet sind.

12. Reifen gemäß Anspruch 11, wobei der erste und der zweite Zwischenprofilblock (130, 132) Rippen (170) nur auf Seitenwänden (160) aufweisen, die sich in einer im Wesentlichen umlaufenden Richtung um den Reifen (100) herum erstrecken.

13. Reifen gemäß Anspruch 12, wobei der erste und der zweite Zwischenprofilblock (130, 132) seitliche Rillen (142) aufweisen, die sich im Wesentlichen in einer seitlichen Richtung quer über den Reifen (100) erstrecken, und Seitenwände (160), die die seitlichen Rillen (142) der Zwischenprofilblöcke (130, 132) bilden, keine Rippen (170) haben.

14. Reifen gemäß Anspruch 10, wobei der mittlere Profilblock (120) seitliche Rillen (140) aufweist, die sich in einer im Wesentlichen seitlichen Richtung quer über den Reifen (100) erstrecken, und Seitenwände (160), die die seitlichen Rillen (140) der mittleren Profilblöcke (120) bilden, Rippen (170) haben, die sich entlang mindestens eines großen Teils davon erstrecken.

## Revendications

1. Pneu (100) comprenant :
des premier et second côtés latéralement espacés (102, 104) ; et
une bande de roulement (110) intercalée entre les premier et second côtés (102, 104), la bande de roulement (110) comprenant une surface de bande de roulement (112) ayant au moins une rainure (114, 116, 122, 124, 140, 142, 144) à l'intérieur de cette dernière, la au moins une rainure comprenant des première et seconde parois latérales (160) en vis-à-vis séparées par une surface inférieure de rainure (162) et des nervures (170) s'étendant sur au moins une partie (166) de chacune des première et seconde parois latérales (160) et les nervures (170) sur les première et seconde parois latérales (160) s'étendent à un angle non perpendiculaire par rapport à la surface de bande de roulement (112), dans lequel les nervures (170) sur les première et seconde parois latérales (160) de la rainure sont opposées entre elles,
**caractérisé en ce que** les nervures (170) sur la première paroi latérale (160) sont à un angle positif (C) et les nervures sur la seconde paroi latérale (160) sont à un angle négatif (C) lorsqu'il est mesuré par rapport à un plan qui est perpendiculaire à la surface inférieure de rainure (162) et perpendiculaire à la surface de chacune des parois latérales.

2. Pneu selon la revendication 1, dans lequel la au moins une rainure (114, 116, 122, 124) s'étend dans une direction sensiblement circonférentielle autour du pneu (100).

3. Pneu selon la revendication 1, dans lequel la au moins une rainure (140, 142, 144) s'étend dans une direction sensiblement latérale d'un côté à l'autre du pneu (100).

4. Pneu selon la revendication 1, dans lequel les nervures (170) sur au moins l'une des parois latérales (160) s'étendent uniquement sur l'une de ses parties (166).

5. Pneu selon la revendication 4, dans lequel les nervures (170) s'étendent vers l'intérieur à partir de la surface de bande de roulement (120) vers la surface inférieure (162) de la au moins une rainure (114, 116, 122, 124, 140, 142, 144) et se terminent sur la paroi latérale (160) au niveau d'une profondeur de rainure espacée au-dessus de la surface inférieure (162).

6. Pneu selon la revendication 1, dans lequel la au moins une rainure comprend l'une des première et seconde rainures internes (114, 116) qui forme un bloc de bande de roulement central (120) séparé des premier et second blocs de bande de roulement intermédiaires (130, 132) où les rainures internes (114, 116) s'étendent dans une direction sensiblement circonférentielle autour du pneu (100).

7. Pneu selon la revendication 6, dans lequel les premier et second blocs de bande de roulement intermédiaires (130, 132) sont espacés des premier et second blocs de bande de roulement d'épaulement (134, 136) par des première et seconde rainures externes (122, 124) s'étendant dans une direction sensiblement circonférentielle autour du pneu (100) et dans lequel les première et seconde rainures externes (122, 124) sont intercalées entre les première et seconde rainures internes (114, 116) et les premier et second côtés (102, 104) du pneu (100), respectivement.

8. Pneu selon la revendication 1, dans lequel les nervures (170) sont généralement définies en alternant des pics (178) et des creux (176).

9. Pneu selon la revendication 8, dans lequel les nervures (170) s'étendent vers l'intérieur à partir de la surface de bande de roulement (112) et se terminent au-dessus de la surface inférieure (162) de la rainure (114, 116, 122, 124, 140, 142, 144).

10. Pneu selon la revendication 1, dans lequel la au moins une rainure comprend l'une des première et seconde rainures internes (114, 116) qui forme un bloc de bande de roulement central (120) séparé des premier et second blocs de bande de roulement intermédiaires (130, 132) où les rainures internes (114, 116) s'étendent dans une direction sensiblement circonférentielle autour du pneu (100), et chacune des parois latérales (160) du bloc de bande de roulement central (120) comprend des nervures (170) formées sur ce dernier.

11. Pneu selon la revendication 10, dans lequel les nervures (170) sur chacune des parois latérales (160) du bloc de bande de roulement central (120) sont disposées sensiblement au même angle.

12. Pneu selon la revendication 11, dans lequel les premier et second blocs de bande de roulement intermédiaires (130, 132) comprennent des nervures (170) uniquement sur les parois latérales (160) qui s'étendent dans une direction sensiblement circonférentielle autour du pneu (100).

13. Pneu selon la revendication 12, dans lequel les premier et second blocs de bande de roulement intermédiaires (130, 132) comprennent des rainures latérales (142) qui s'étendent dans une direction sensiblement latérale d'un côté à l'autre du pneu (100), et les parois latérales (160) qui forment les rainures latérales (142) des blocs de bande de roulement intermédiaires (130, 132) sont dépourvues de nervures (170).

14. Pneu selon la revendication 10, dans lequel le bloc de bande de roulement central (120) comprend des rainures latérales (140) qui s'étendent dans une direction sensiblement latérale d'un côté à l'autre du pneu (100) et des parois latérales (160) qui forment les rainures latérales (140) des blocs de bande de roulement centraux (120) ont des nervures (170) s'étendant le long d'au moins une majeure partie de ces derniers.
